# EUROPEAN PATENT APPLICATION

(11) **EP 2 503 805 A1**
(43) Date of publication of application: **26.09.2012**
(21) Application number: 10791179.4
(22) Date of filing: 23.03.2010
(51) Int. Cl.: H04W 12/00

(54) **LOCKING METHOD, DEVICE AND SYSTEM FOR PARTIAL FUNCTIONS OF TERMINAL**

(30) Priority: 17.12.2009 CN 200910252500
(71) Applicant: ZTE Corporation, Shenzhen, Guangdong 518057 (CN)
(72) Inventor: YANG, Hanling, Shenzhen Guangdong 518057 (CN)
(74) Representative: Jansen, Cornelis Marinus
(86) International application number: PCT/CN2010/071202
(87) International publication number: WO 2010/148673

(57) **Abstract**

A method for partially locking functions of a terminal is disclosed, which includes the following steps: a device management server receives and analyzes a partially locking request message to obtain a terminal identifier and a designated call identifier which are included in the message; and sends a partially locking command to a terminal corresponding to the terminal identifier, wherein the partially locking command carries the designated call identifier and instructs the terminal to modify a functional attribute of the terminal per se to only answering a call corresponding to the designated call identifier. Another two methods for partially locking functions of a terminal, a device management server, a terminal, and a system for partially locking functions of a terminal are further disclosed. The disclosure can solve the problem in the prior art that: a call channel and other resources are occupied and the security of information of the terminal cannot be guaranteed as the terminal can still answer all incoming calls after functions of the terminal are partially locked.

## Description

### TECHNICAL FIELD

The disclosure relates to the field of communications, and in particular to three methods for partially locking functions of a terminal, a device management server, a terminal and a system for partially locking functions of a terminal.

### BACKGROUND

The Lock And Wipe Management Object (LAWMO) protocol in the Open Mobile Alliance Device Management (OMADM) provides a function of remotely locking/unlocking terminal functions, and a function of wiping terminal data and restoring factory resetting. Wherein remotely locking terminal functions is further divided into two kinds: fully locking terminal functions and partially locking terminal functions. Fully locking terminal functions means that a terminal is unable to perform any operation except a function mandatorily required by law and a function required for terminal recovery. Partially locking terminal functions means that a terminal is unable to perform any operation except call answering, the function mandatorily required by law and the function required for terminal recovery.

For a terminal, when the terminal owner finds that the terminal is lost, partially locking terminal functions can be started, that is, the terminal owner can immediately request a customer service representative to start the function of partially locking terminal functions. After the identity of the terminal owner is confirmed, the customer service representative issues a command of partially locking functions to the terminal through a device management server; after the terminal receives the command of partially locking functions, the functions of the terminal are partially locked such that personal information is prevented from being obtained illegally. Then the terminal owner makes a call to its terminal to request a person who found the terminal to give the terminal back. After the terminal is given back, the terminal owner then requests a customer service representative to perform the terminal unlocking function.

However, even if the functions of the terminal are partially locked, there is still great risk for the terminal owner. After the functions of the terminal are partially locked, the terminal still can be used for answering all incoming calls including incoming calls from the terminal owner and incoming calls from other persons except the terminal owner, and a call channel and other resources are occupied. In addition, when the existing method for partially locking functions of a terminal is employed, the terminal still can be used for answering all incoming calls, thereby the security of,information of the terminal cannot be guaranteed.

### SUMMARY

An embodiment of the disclosure provides a method for partially locking functions of a terminal, to solve the problems in the prior art that: a call channel and other resources are occupied and the security of information of the terminal cannot be guaranteed as the terminal can still answer all incoming calls after functions of the terminal are partially locked; the method includes:
a device management server receives and analyzes a partially locking request message to obtain a terminal identifier and a designated call identifier which are included in the message; and sends a partially locking command to a terminal corresponding to the terminal identifier, wherein the partially locking command carries the designated call identifier and instructs the terminal to modify a functional attribute of the terminal per se to only answering a call corresponding to the designated call identifier.

An embodiment of the disclosure further provides a method for partially locking functions of a terminal, to solve the problems in the prior art that: a call channel and other resources are occupied and the security of information of the terminal cannot be guaranteed as the terminal can still answer all incoming calls after functions of the terminal are partially locked; the method includes:
a terminal receives a partially locking command sent by a device management server, and analyzes the partially locking command to obtain a designated call identifier carried in the command; and modifies a functional attribute of the terminal per se to only answering a call corresponding to the designated call identifier.

An embodiment of the disclosure further provides a method for partially locking functions of a terminal, to solve the problems in the prior art that: a call channel and other resources are occupied and the security of information of the terminal cannot be guaranteed as the terminal can still answer all incoming calls after functions of the terminal are partially locked; the method includes:
a device management server receives and analyzes a partially locking request message to obtain a terminal identifier and a designated call identifier which are included in the message; and sends a partially locking command to a terminal corresponding to the terminal identifier, wherein the partially locking command carries the designated call identifier and instructs the terminal to modify a functional attribute of the terminal per se to only answering a call corresponding to the designated call identifier; and
the terminal receives the partially locking command sent by the device management server, and analyzes the partially locking command to obtain the designated call identifier carried in the command; and modifies the functional attribute of the terminal per se to only answering the call corresponding to the designated call identifier.

An embodiment of the disclosure further provides a device management server, to solve the problems in the prior art that: a call channel and other resources are occupied and the security of information of the terminal cannot be guaranteed as the terminal can still answer all incoming calls after functions of the terminal are partially locked; the device management server includes:
a first receiving unit, configured to receive and analyze a partially locking request message to obtain a terminal identifier and a designated call identifier which are included in the message; and
a first sending unit, configured to send a partially locking command to a terminal corresponding to the terminal identifier, wherein the partially locking command carries the designated call identifier and instructs the terminal to modify a functional attribute of the terminal per se to only answering a call corresponding to the designated call identifier.

An embodiment of the disclosure further provides a terminal, to solve the problems in the prior art that: a call channel and other resource are occupied and the security of information of the terminal cannot be guaranteed as the terminal can still answer all incoming calls after functions of the terminal are partially locked; the terminal includes:
a terminal side receiving unit, configured to receive a partially locking command sent by a device management server, and analyze the partially locking command to obtain a designated call identifier carried in the command; and
a first modifying unit, configured to modify its own functional attribute to only answering a call corresponding to the designated call identifier.

An embodiment of the disclosure further provides a system for partially locking functions of a terminal, to solve the problems in the prior art that: a call channel and other resources are occupied and the security of information of the terminal cannot be guaranteed as the terminal can still answer all incoming calls after functions of the terminal are partially locked; the system includes a device management server and a terminal:
the device management server receives and analyzes a partially locking request message to obtain a terminal identifier and a designated call identifier which are included in the message; and sends a partially locking command to a terminal corresponding to the terminal identifier, wherein the partially locking command carries the designated call identifier and instructs the terminal to modify a functional attribute of the terminal per se to only answering a call corresponding to the designated call identifier; and
the terminal receives the partially locking command sent by the device management server, and analyzes the partially locking command to obtain the designated call identifier carried in the command; and modifies the functional attribute of the terminal per se to only answering the call corresponding to the designated call identifier.

In the embodiment of the disclosure, the device management server receives and analyzes the partially locking request message to obtain the terminal identifier and the designated call identifier which are included in the message; sends a partially locking command to the terminal corresponding to the terminal identifier, wherein the partially locking command carries the designated call identifier and instructs the terminal to modify the functional attribute of the terminal per se to only receiving the call corresponding to the designated call identifier; and the terminal accepts the partially locking command sent by the device management server, analyzes the partially locking command to obtain the designated call identifier, and modifies the functional attribute of the terminal per se to only answering the call corresponding to the designated call identifier. It can be seen that, in the embodiment of the disclosure, after the functions of the terminal are partially locked, the terminal can only answer the call corresponding to the designated call identifier, instead of answering all incoming calls or calls, such that the call channel and other resources can be saved. In addition, by means of the method for partially locking functions of the terminal provided in the embodiment of the disclosure, the terminal can only answer the call corresponding to the designated call identifier, instead of answering incoming calls or calls other than the call corresponding to the designated call identifier, such that the security of information of the terminal can be guaranteed, the security of the existing method for partially locking the functions of the terminal is improved, and the interests of the terminal owners are protected effectively.

### BRIEF DESCRIPTION OF THE DRAWINGS

Fig. 1 is a first specific flowchart of a method for partially locking functions of a terminal according to an embodiment of the disclosure;
Fig. 2 is a second specific flowchart of the method for partially locking functions of a terminal according to an embodiment of the disclosure;
Fig. 3 is a schematic diagram illustrating specific structure of an existing LAWMO node;
Fig. 4 is a schematic diagram illustrating specific structure of an LAWMO node according to an embodiment of the disclosure;
Fig. 5 is a third specific flowchart of the method for partially locking functions of a terminal according to an embodiment of the disclosure;
Fig. 6 is a first structure diagram of a device management server according to an embodiment of the disclosure;
Fig. 7 is a second structure diagram of the device management server according to an embodiment of the disclosure;
Fig. 8 is a first structure diagram of a terminal according to an embodiment of the disclosure;
Fig. 9 is a second structure diagram of the terminal according to an embodiment of the disclosure; and
Fig. 10 is a structure diagram of a system for partially locking functions of a terminal according to an embodiment of the disclosure.

### DETAILED DESCRIPTION

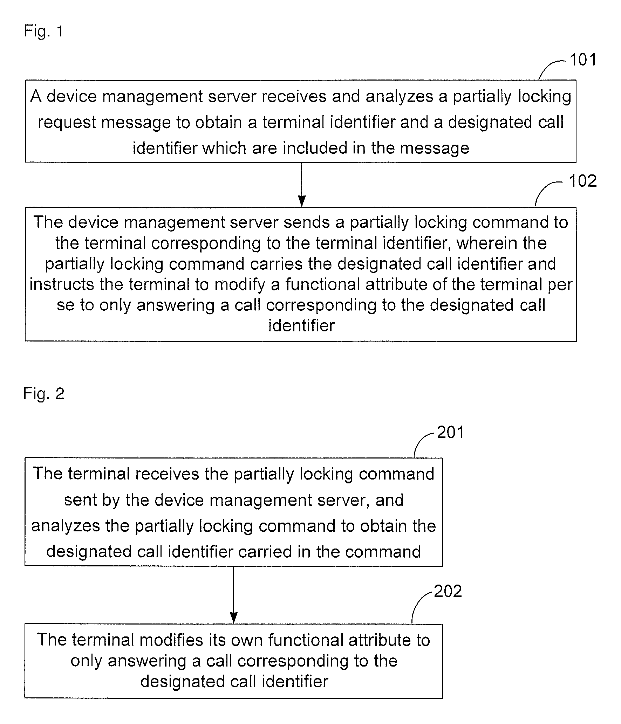

In order to solve the problem in the prior art that: with the existing method for partially locking functions of a terminal, the terminal still can be used for answering all incoming calls including incoming calls from the terminal owner and incoming calls from other persons except the terminal owners, after functions of the terminal are partially locked, thereby the call channel and other resources are occupied and the security of information of the terminal cannot be guaranteed, an embodiment of the disclosure provides a method for partially locking functions of a terminal, and the specific processing flow, as shown in Fig. 1, includes:
step 101: a device management server receives and analyzes a partially locking request message to obtain a terminal identifier and a designated call identifier which are included in the message; and
step 102: the device management server sends a partially locking command to a terminal corresponding to the terminal identifier, wherein the partially locking command carries the designated call identifier and instructs the terminal to modify a functional attribute of the terminal per se to only answering a call corresponding to the designated call identifier.

As the flow shown in Fig. 1, when the step 101 is performed, the designated call identifier is designated by the terminal owner and can be selected or modified according to the desires of the terminal owner, for example, the terminal owner may select a telephone number of a fixed phone, a telephone number of a mobile terminal or other call identifiers, as long as the call identifier can corresponds to a call. There may be one or more designated call identifier(s), and the specific number of the designated call identifiers is determined according to an actual situation.

As the flow shown in Fig. 1, when the step 102 is performed, the partially locking command can be sent to the terminal corresponding to the terminal identifier by various implementing means, for example, the partially locking command may be sent by radio Hyper Text transport Protocol (HTTP), also may be sent by Object Exchange (OBEX), and still may be sent by bluetooth or the like, which means is specifically employed for sending is determined according to an actual situation.

As the flow shown in Fig. 1, after the step 102 is performed, if the terminal is given back to the terminal owner, the terminal owner can notify the device management server that the terminal has been given back and the locked functions of the terminal should be unlocked, at this moment, the device management server receives an unlocking request sent by the terminal owner and sends an unlocking command to the terminal.

Based on the same inventive concept, an embodiment of the disclosure further provides a method for partially locking functions of a terminal, and the specific processing flow, as shown in Fig. 2, includes:
step 201: a terminal receives a partially locking command sent by a device management server, and analyzes the partially locking command to obtain a designated call identifier carried in the command; and
step 202: the terminal modifies its own functional attribute to only answering a call corresponding to the designated call identifier.

As the flow shown in Fig. 2, when the step 202 is performed, the terminal modifies its own functional attribute to only answering the call corresponding to the designated call identifier, and the modification of the functional attribute may be performed by various implementing modes, for example, one preferred mode is that: the terminal presets an incoming call "IncomingCall" node, when the designated call identifier carried in the partially locking command is obtained, the value of the IncomingCall node is modified to the designated call identifier. Of course, there may be other implementing modes, as long as the function that the terminal can only answer the call corresponding to the designated call identifier can be realized by using the implementing mode.

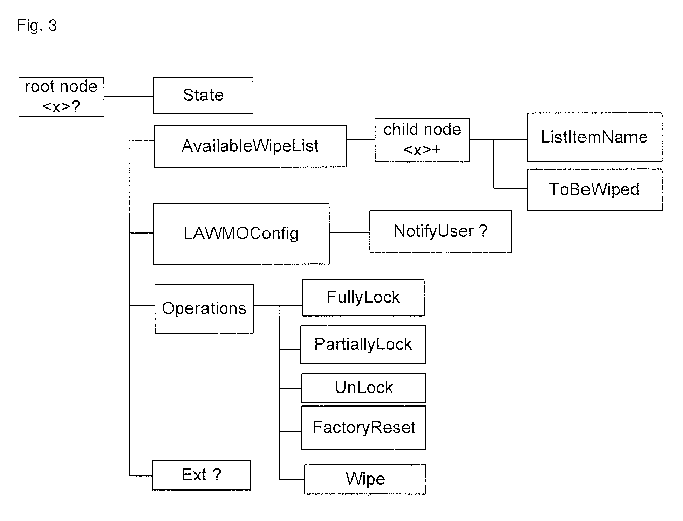

When an implementing mode in which the IncomingCall node is preset is employed, the IncomingCall node may be added in an LAWMO node, the specific structure of an existing LAWMO node is shown in Fig. 3, which includes: a root node "<x>?", a state "State", an available wipe list "AvailableWipeList", a child node "<x>+", a list item name "ListltemName", to be wiped "ToBeWiped", a lock and wipe management object configuration "LAWMOConfig", notifying user "NotifyUser?", operations "Operations", fully locking "FullyLock", partially locking "PartiallyLock", unlocking "UnLock", restoring factory resetting "FactoryReset", wipe "Wipe" and exit "Ext?".

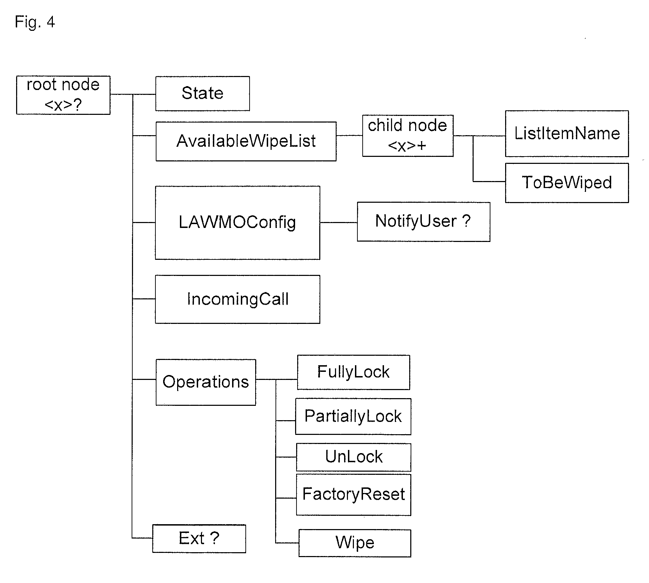

The specific structure of the LAWMO node in which the IncomingCall node is added is shown in Fig. 4, in the structure shown in Fig. 4, besides the structure shown in Fig. 3, the IncomingCall node further is added. The specific attribute of the IncomingCall node provided in the embodiment includes: a status "Status", the number of the designated call identifiers "Occurrence", a format "Format", a minimum access type "Min.Access" or the like, and one specific attribute case is shown as in Table 1:

**Table 1**

| Status | Occurrence | Format | Min. |
|---|---|---|---|
| Required | One | Chr | Get, |

In Table 1, the "Status" is in the "Required" state, that is, the functions of the terminal have been partially locked, the "Occurrence" is one, the "Format "is a string "Chr", and the "Min.Access" is read/modify.

As the flow shown in Fig. 2, after the step 202 is performed, if the terminal is given back to the terminal owner, when the terminal receives an unlocking command sent by the device management server, the terminal modifies the functional attribute of the terminal to answering all calls.

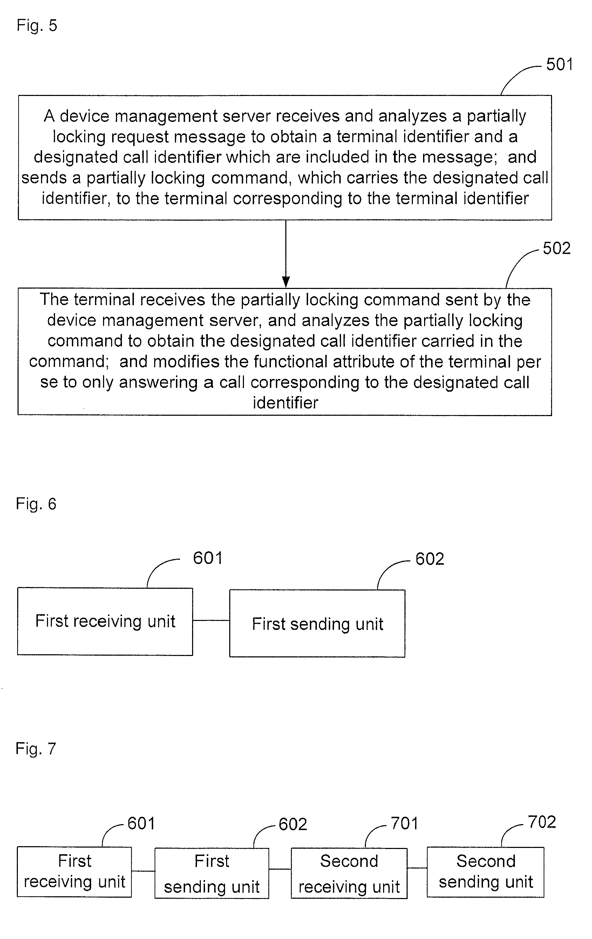

Based on the same inventive concept, an embodiment of the disclosure further provides a method for partially locking functions of a terminal, and the specific processing flow, as shown in Fig. 5, includes:
step 501: a device management server receives and analyzes a partially locking request message to obtain a terminal identifier and a designated call identifier included in the message; and sends a partially locking command, which carries the designated call identifier, to a terminal corresponding to the terminal identifier; and
step 502: the terminal receives the partially locking command sent by the device management server, and analyzes the partially locking command to obtain the designated call identifier carried in the command; and modifies the functional attribute of the terminal per se to only answering a call corresponding to the designated call identifier.

Based on the same inventive concept, an embodiment of the disclosure further provides a device management server, and the specific structure of the device management server is as shown in Fig. 6, which includes:
a first receiving unit 601, configured to receive and analyze a partially locking request message to obtain a terminal identifier and a designated call identifier which are included in the message; and
a first sending unit 602, configured to send a partially locking command to a terminal corresponding to the terminal identifier, wherein the partially locking command carries the designated call identifier and instructs the terminal to modify the functional attribute of the terminal per se to only answering a call corresponding to the designated call identifier.

In an embodiment, as shown in Fig. 7, the device management server may further include:
a second receiving unit 701, configured to receive an unlocking request message; and
a second sending unit 702, configured to send to the terminal an unlocking command, which instructs the terminal to modify the functional attribute of the terminal to answering all calls.

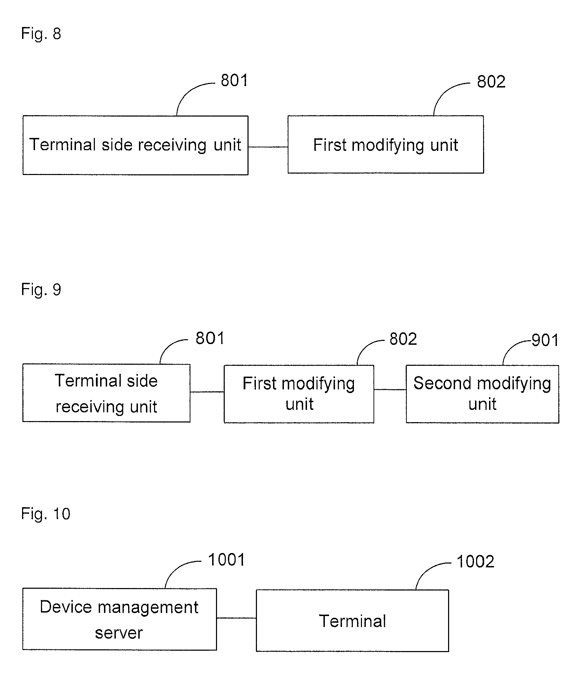

Based on the same inventive concept, an embodiment of the disclosure further provides a terminal, and the specific structure of the terminal is as shown in Fig. 8, which includes:
a terminal side receiving unit 801, configured to receive a partially locking command sent by a device management server, and analyze the partially locking command to obtain a designated call identifier carried in the command; and
a first modifying unit 802, configured to modify its own functional attribute to only answering a call corresponding to the designated call identifier.

In an embodiment, as shown in Fig. 8, the modifying unit 802 may be further configured to: modify the value of a preset IncomingCall node to the designated call identifier.

In an embodiment, as shown in Fig. 9, the terminal may further include:
a second modifying unit 901, configured to modify its own functional attribute to answering all calls after receiving an unlocking command sent by the device management server.

Based on the same inventive concept, an embodiment of the disclosure further provides a system for partially locking functions of a terminal, as shown in Fig. 10, the system includes: a device management server 1001 and a terminal 1002;
the device management server 1001 receives and analyzes a partially locking request message to obtain a terminal identifier and a designated call identifier which are included in the message; and sends a partially locking command, which carries the designated call identifier, to the terminal 1002 corresponding to the terminal identifier;
the terminal 1002 receives the partially locking command sent by the device management server 1001, and analyzes the partially locking command to obtain the designated call identifier carried in the command; and modifies the functional attribute of the terminal 1002 per se to only answering a call corresponding to the designated call identifier.

In the embodiment of the disclosure, the device management server receives and analyzes the partially locking request message to obtain the terminal identifier and the designated call identifier which are included in the message; and sends the partially locking command, which carries the designated call identifier, to the terminal corresponding to the terminal identifier; and the terminal accepts the partially locking command sent by the device management server, analyzes the partially locking command to obtain the designated call identifier, and modifies the functional attribute of the terminal per se to only answering the call corresponding to the designated call identifier. It can be seen that, in the embodiment of the disclosure, after the functions of the terminal are partially locked, the terminal can only answer the call corresponding to the designated call identifier, instead of answering all incoming calls or calls, such that the call channel and other resource can be saved. In addition, by means of the method for partially locking functions of the terminal provided in the embodiment of the disclosure, the terminal can only answer the call corresponding to the designated call identifier, instead of answering incoming calls or calls other than the call corresponding to the designated call identifier, such that the security of information of the terminal can be guaranteed, the security of the existing method for partially locking functions of the terminal is improved, and the interests of the terminal owners are protected effectively.

Obviously, for those skilled in the art, various changes and variants can be made according to the disclosure within the spirit and scope of the disclosure. In this way, if these modifications and variants of the disclosure are within the scope of the claims of the disclosure and the equivalent technology thereof, the disclosure is intended to include these changes and variants.

## Claims

1. A method for partially locking functions of a terminal, comprising:
receiving and analyzing, by a device management server, a partially locking request message to obtain a terminal identifier and a designated call identifier which are included in the message; and
sending a partially locking command to a terminal corresponding to the terminal identifier, wherein the partially locking command carries the designated call identifier and instructs the terminal to modify a functional attribute of the terminal per se to only answering a call corresponding to the designated call identifier.

2. The method according to claim 1, further comprising:
receiving, by the device management server, an unlocking request message and sending an unlocking command to the terminal, wherein the unlocking command instructs the terminal to modify the functional attribute to answering all calls,.

3. A method for partially locking functions of a terminal, comprising:
receiving, by a terminal, a partially locking command sent by a device management server, and analyzing the partially locking command to obtain a designated call identifier carried in the command; and
modifying a functional attribute of the terminal per se to only answering a call corresponding to the designated call identifier.

4. The method according to claim 3, wherein the step of modifying the functional attribute of the terminal per se to only answering the call corresponding to the designated call identifier specifically comprises:
modifying a value of a preset incoming call IncomingCall node, and modifying the value of the IncomingCall node to the designated call identifier.

5. The method according to claim 3 or 4, further comprising:
modifying, by the terminal, the functional attribute of the terminal per se to answering all calls after receiving an unlocking command sent by the device management server.

6. A method for partially locking functions of a terminal, comprising:
receiving and analyzing a partially locking request message by a device management server to obtain a terminal identifier and a designated call identifier which are included in the message; and sending a partially locking command to a terminal corresponding to the terminal identifier, wherein the partially locking command carries the designated call identifier and instructs the terminal to modify a functional attribute of the terminal per se to only answering a call corresponding to the designated call identifier; and
receiving, by the terminal, the partially locking command sent by the device management server, and analyzing the partially locking command to obtain the designated call identifier carried in the command; and modifying the functional attribute of the terminal per se to only answering the call corresponding to the designated call identifier.

7. A device management server, comprising:
a first receiving unit, configured to receive and analyze a partially locking request message to obtain a terminal identifier and a designated call identifier which are included in the message; and
a first sending unit, configured to send a partially locking command to a terminal corresponding to the terminal identifier, wherein the partially locking command carries the designated call identifier and instructs the terminal to modify a functional attribute of the terminal per se to only answering a call corresponding to the designated call identifier.

8. The device management server according to claim 7, further comprising:
a second receiving unit, configured to receive an unlocking request message sent by an owner of the terminal; and
a second sending unit, configured to send an unlocking command to the terminal, wherein the unlocking command instructs the terminal to modify the functional attribute to answering all calls.

9. A terminal, comprising:
a terminal side receiving unit, configured to receive a partially locking command sent by a device management server, and analyze the partially locking command to obtain a designated call identifier carried in the command; and
a first modifying unit, configured to modify its own functional attribute to only answering a call corresponding to the designated call identifier.

10. The terminal according to claim 9, wherein the first modifying unit realizes a function of modifying its own functional attribute to only answering the call corresponding to the designated call identifier through modifying a value of a preset incoming call IncomingCall node to the designated call identifier.

11. The terminal according to claim 9 or 10, further comprising:
a second modifying unit, configured to modify its own functional attribute to answering all calls after receiving an unlocking command sent by the device management server.

12. A system for partially locking functions of a terminal, comprising a device management server and a terminal:
the device management server receives and analyzes a partially locking request message to obtain a terminal identifier and a designated call identifier which are included in the message; and sends a partially locking command to a terminal corresponding to the terminal identifier, wherein the partially locking command carries the designated call identifier and instructs the terminal to modify a functional attribute of the terminal per se to only answering a call corresponding to the designated call identifier; and
the terminal receives the partially locking command sent by the device management server, and analyzes the partially locking command to obtain the designated call identifier carried in the command; and modifies the functional attribute of the terminal per se to only answering the call corresponding to the designated call identifier.
